# DEMANDE DE BREVET EUROPEEN

(11) **EP 0 639 034 A1**
(43) Date de publication de la demande: **15.02.1995**
(21) Numéro de dépôt: 94401830.8
(22) Date de dépôt: 09.08.1994
(51) Int. Cl.: H04Q 7/32

(54) **Procédé d'initialisation d'un transfert d'appel à l'aide d'un dispositif supportant une station radio mobile**

(30) Priorité: 13.08.1993 FR 9309955
(71) Demandeur: ALCATEL MOBILE COMMUNICATION FRANCE, 75008 Paris (FR)
(72) Inventeur: Dupuy, Pierre, F-75017 Paris (FR)
(74) Mandataire: Pothet, Jean Rémy Emile Ludovic

(57) **Abrégé**

La présente invention concerne un procédé de transfert d'appels à partir d'une station mobile (MS) d'un réseau de radiocommunications (NW) vers un autre poste dont le numéro d'appel (N) est connu d'organes adaptés du réseau (NW), le déclenchement du transfert d'appels étant effectué par l'intermédiaire de la station mobile (MS) communiquant à cet effet par voie radio avec le réseau (NW) ; la station mobile (MS) est en outre susceptible d'être rechargée à l'aide d'un dispositif de recharge (C).

Ce procédé est caractérisé en ce que la détection de la présence de la station mobile (MS) dans le dispositif de recharge (C) déclenche automatiquement le transfert d'appels (ACTIVATE CF) vers un autre poste.

## Description

La présente invention concerne un procédé de transfert d'appels à partir d'une station mobile vers un autre poste, ainsi qu'un dispositif de recharge et une station mobile pour la mise en oeuvre de ce procédé, la station mobile faisant partie d'un réseau de radiocommunications, de type GSM notamment.

Il est bien connu dans les réseaux de radiocommunications, et notamment dans les réseaux de type GSM, d'effectuer des transferts d'appels (Call Forwarding dans la terminologie GSM), c'est-à-dire de transférer un appel initialement à destination d'une station mobile vers une autre station mobile ou bien vers un poste appartenant par exemple à un réseau filaire.

Selon une première méthode d'activation, l'utilisateur d'une station mobile (un radiotéléphone portable ou portatif) peut décider à tout moment de déclencher (activer) le transfert d'appels, soit en sélectionnant à l'aide du clavier un menu particulier qui lui est proposé par la station mobile, soit en composant une suite d'instructions prédéterminée à l'aide des touches du clavier, en suivant un protocole défini dans les spécifications du GSM. Dans ces deux cas, il s'agit d'un transfert dit manuel.

Selon une autre méthode d'activation, il est possible pour l'utilisateur de choisir une procédure automatique selon laquelle, dès que la station mobile est mise hors tension, le transfert est activé. Au niveau du réseau, les informations relatives à l'abonnement de l'utilisateur sont dans ce cas telles que le choix du transfert automatique et le numéro du poste fixe de transfert y sont contenus. Une telle possibilité fait partie des services offerts par la plupart des réseaux de type RNIS.

Une fois le transfert activé, on dit que la station mobile se trouve en mode transfert.

Ce transfert d'appels est en général dirigé vers le téléphone fixe de l'utilisateur, par exemple à son domicile ou à son bureau. Le numéro d'appel du poste vers lequel le transfert doit être effectué a été au préalable mis en mémoire par l'utilisateur au sein d'organes adaptés du réseau de radiocommunications (base de données dénommée HLR, pour Home Location Register, dans la terminologie GSM).

Toutes les opérations liées au transfert d'appels (activation ou désactivation du mode transfert en cas de transfert manuel, mise en mémoire du numéro d'appel du poste vers lequel le transfert doit être effectué, modification de ce numéro, etc...) sont transmises au réseau sous forme d'instructions échangées par voie radio au moyen de messages de signalisation adaptés, éventuellement pendant une communication, entre la station mobile et le HLR d'une part, et la station mobile et le VLR (Visitor Location Register) associé au centre de commutation dont dépend la cellule dans laquelle se trouve la station mobile d'autre part.

De plus, la plupart des réseaux offrent la possibilité de programmer le transfert d'appels vers des numéros différents en fonction de l'heure de l'appel, car par exemple, lorsque seul un numéro d'appel peut être mis en mémoire, si l'utilisateur se trouve à son bureau et que le numéro d'appel de son domicile a été programmé, le transfert est inutile.

L'utilisateur a par ailleurs le choix entre un transfert conditionnel et un transfert inconditionnel. Dans le cas d'un transfert conditionnel, le transfert n'est effectué qu'en cas de non réponse de la station mobile à un appel, alors qu'en cas de transfert inconditionnel, il n'y a pas d'essai préalable à destination de la station mobile. Le transfert inconditionnel est plus avantageux pour l'appelant. En effet, dans ce cas, lors d'un appel à destination d'une station mobile, le délai d'attente est moins long.

Une fois le mode transfert activé, d'une manière ou d'une autre, la station mobile peut être mise hors tension.

Le problème posé par l'activation et la désactivation manuelles du mode transfert, et par les opérations en découlant (mise en mémoire ou changement en mémoire du numéro d'appel du poste vers lequel le transfert doit être effectué, choix du transfert conditionnel ou non, etc...) réside dans le fait que ces opérations ne sont pas automatisées, et constituent donc une source d'erreurs potentielle lors des manipulations par l'utilisateur.

Or on sait qu'un souci constant lors de la conception de réseaux de communication est de simplifier au maximum les opérations à effectuer par les utilisateurs dans tous les services offerts, de manière à limiter autant que possible les risques d'erreurs.

Même si la procédure automatique permet de supprimer certaines manipulations, elle pose le même type de problème, puisque de nombreuses opérations doivent être effectuées par l'utilisateur s'il souhaite programmer plusieurs numéros de transfert.

Le but de la présente invention est de simplifier les opérations à effectuer dans les procédures de transfert d'appels.

La présente invention propose à cet effet un procédé de transfert d'appels à partir d'une station mobile d'un réseau de radiocommunications vers un autre poste dont le numéro d'appel est connu d'organes adaptés dudit réseau, le déclenchement du transfert d'appels étant effectué par l'intermédiaire de ladite station mobile communiquant à cet effet par voie radio avec ledit réseau, ladite station mobile étant en outre susceptible d'être posée sur un support,
caractérisé en ce que la détection de la présence de ladite station mobile sur ledit support déclenche automatiquement le transfert d'appels vers un autre poste.

Grâce à l'invention, et dans la majorité des cas où le transfert est demandé, c'est-à-dire dans les cas où la station mobile est posée sur un support se trouvant au domicile ou au bureau de l'utilisateur, le transfert est déclenché automatiquement par la détection de la présence de la station mobile sur le support.

Typiquemnt, le support est sous la forme d'un dispositif de recharge.

Le procédé selon l'invention simplifie donc grandement les opérations d'activation du transfert d'appels dans ces cas, tout en conservant les mêmes protocoles pour les échanges entre la station mobile et le réseau. En effet, les messages de signalisation peuvent rester inchangés : la seule différence entre le procédé selon l'invention et ceux de l'art antérieur réside dans la méthode d'activation du mode transfert, toutes les opérations ultérieures, déjà automatiques dans l'art antérieur, le restant.

D'autres caractéristiques et avantages de la présente invention apparaîtront dans la description suivante d'un procédé selon la présente invention, donnée à titre illustratif et nullement limitatif.

Dans les figures suivantes :
- la figure 1 illustre les messages échangés entre un dispositif de recharge (chargeur) et une station mobile d'une part, et entre cette station mobile et le réseau d'autre part selon une première application du procédé selon l'invention,
- la figure 2 illustre les messages échangés entre un chargeur et une station mobile d'une part, et entre cette station mobile et le réseau d'autre part selon une deuxième application du procédé selon l'invention.

Dans ces figures, les éléments communs sont référencés de la même manière.

Dans une première application du procédé selon l'invention, un seul chargeur C est disponible pour recharger une station mobile MS (radiotéléphone portatif ou portable).

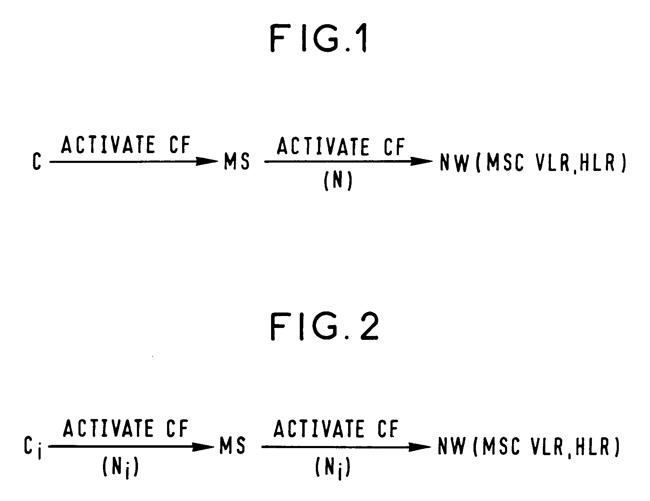

Dans ce cas, et comme illustré en figure 1, après détection de la présence de la station mobile MS dans le chargeur C, par des moyens adaptés au sein du chargeur C, le chargeur déclenche automatiquement le transfert (message ACTIVATE CF). Par exemple, le message ACTIVATE CF peut être transmis du chargeur C à la station mobile MS par exemple par interruption (ou au contraire arrêt de l'interruption) d'une ligne reliant la station mobile par l'intermédiaire d'un connecteur et d'une prise adaptés, l'interruption de cette ligne entraînant la modification d'un signal transmis par la station mobile MS au réseau NW de sorte que ce signal comporte l'information ACTIVATE CF. Selon cette variante, le message ACTIVATE CF est sous la forme de l'un de deux états binaires d'un signal et le numéro d'appel N du poste vers lequel le transfert doit être effectué est mis en mémoire dans la station mobile, qui le communique au réseau NW (c'est-à-dire aux organes de ce dernier concernés, soit le HLR et le MSC VLR).

La station mobile MS transmet par voie radio au réseau NW le message ACTIVATE CF.

Selon l'invention, le numéro N peut également être mis en mémoire au sein du chargeur C (comportant à cet effet une mémoire) qui le communique aux organes adaptés du réseau NW par l'intermédiaire de la station mobile MS après que la présence de cette dernière dans le chargeur C a été détectée. Pour cela, le chargeur C comporte des moyens adaptés pour transmettre à la station mobile MS le numéro N, comme par exemple une ligne de transmission de données entre sa mémoire et celle de la station mobile, le chargeur et la station mobile étant munis chacun respectivement d'un connecteur et d'une prise adaptée.

De manière très avantageuse, dans une deuxième application du procédé selon l'invention, lorsque plusieurs chargeurs C₁, ... Cₙ (un seul chargeur, référencé Cᵢ, est schématisé en figure 2) sont disponibles pour recharger la station mobile MS à plusieurs endroits différents, chaque chargeur est muni d'un numéro d'identification Nᵢ, associé au numéro d'appel du poste vers lequel le transfert d'appels doit être effectué. Avantageusement, un numéro Nᵢ peut être modifié par l'usager dans un dispositif de recharge, par exemple au moyen d'une roue codeuse.

Le numéro Nᵢ est communiqué par le chargeur Cᵢ à la station mobile MS après détection de la présence de cette dernière, dans un message ACTIVATE CF. Ce numéro Nᵢ peut être transmis à la station mobile MS de la même manière que décrite ci-dessus. De même, le message ACTIVATE CF peut être transmis de la même manière que décrite ci-dessus du chargeur Cᵢ vers la station mobile MS.

Dans cette application à plusieurs chargeurs, chaque numéro d'identification peut soit être constitué du numéro d'appel du poste vers lequel le transfert doit être effectué (dans ce cas, ainsi que représenté en figure 2, la station mobile MS communique le numéro Nᵢ aux organes adaptés du réseau NW dans un message retransmettant l'ordre ACTIVATE CF), soit constituer un code associé à un numéro d'appel distinct correspondant au numéro d'appel du poste vers lequel le transfert doit être effectué, la correspondance entre les numéros d'appel et les numéros d'identification ayant été au préalable mise en mémoire au sein de la station mobile MS. Dans ce dernier cas, la station mobile MS communique aux organes adaptés du réseau NW le numéro d'appel correspondant au numéro Nᵢ dans le message retransmettant l'ordre ACTIVATE CF.

Ainsi, il n'est plus nécessaire de programmer différents numéros de transfert en fonction de l'heure de l'appel, puisque chaque chargeur communique un numéro a priori distinct (par exemple, le chargeur du domicile communique le numéro du poste fixe du domicile, et le chargeur du bureau celui du poste fixe du bureau).

Le cas où chaque numéro d'identification est constitué du numéro d'appel du poste vers lequel le transfert doit être effectué peut être très avantageux pour un hôtel dont chaque chambre dispose d'un chargeur : dans ce cas, chaque chargeur transfère les appels automatiquement vers le numéro du poste fixe de l'hôtel. Il peut en être de même dans un restaurant offrant à ses clients des chargeurs pour déposer leurs radiotéléphones à l'entrée : tous les chargeurs renvoient les appels vers le numéro du poste fixe du restaurant.

Lorsque chaque numéro d'identification constitue un code associé à un numéro d'appel, on affecte par exemple à chaque chargeur un numéro distinct entre 1 et 10. Dans ce cas, au moins un numéro d'identification, dit numéro réservé, peut n'être associé à aucun numéro d'appel et servir à empêcher le déclenchement automatique du transfert d'appels, même lorsque la présence de la station mobile est détectée dans le dispositif de recharge. Dans ce cas, le réseau NW auquel est communiqué le numéro réservé n'active pas le transfert d'appels.

Par exemple, le numéro de code associé à un dispositif de recharge situé dans un véhicule mobile peut être un numéro réservé. En effet, lorsque la station mobile est mise à recharger dans une voiture par exemple, il n'y a en général pas de transfert à effectuer vers un poste fixe. On peut ainsi éviter le transfert automatique systématique.

Bien entendu, la présente invention n'est pas limitée aux applications qui viennent d'être décrites.

En particulier, le transfert peut être conditionnel, c'est-à-dire n'être effectué qu'en cas de non réponse de la station mobile à un appel, ou inconditionnel.

Une fois le transfert effectué, la station mobile peut être mise hors tension.

Selon une caractéristique avantageuse, lorsque la présence de la station mobile dans le dispositif de recharge n'est plus détectée, le transfert peut être automatiquement annulé par la station mobile, soit après un délai préétabli, soit dès qu'un utilisateur l'utilise.

La présente invention concerne également un dispositif de recharge pour la mise en oeuvre du procédé dont les caractéristiques viennent d'être décrites.

Ce dispositif comporte des moyens de détection de la présence de la station mobile, des moyens pour transmettre des messages à la station mobile, ainsi que des moyens pour conserver en mémoire le numéro d'appel ou le numéro d'identification, et le cas échéant, des moyens de sélection d'un numéro d'identification, comme une roue codeuse par exemple.

Ce dispositif peut également comprendre des moyens, susceptibles d'être activés par un utilisateur et tels que, lorsqu'ils sont activés, par exemple lorsqu'une station mobile est installée dans un véhicule mobile, et même si la présence de cette dernière a été détectée, aucun transfert n'est activé.

Ces moyens permettent d'empêcher le transfert automatique systématique sans modification des protocoles au niveau du réseau.

Il apparaîtra évident à l'homme du métier que le chargeur peut être remplacé, sans sortir du cadre de l'invention, par un support quelconque, tel que simple support de maintien. Le support reçoit la station mobile lorsqu'elle est posée par un utilisateur.

Une station mobile pour la mise en oeuvre de l'invention comprend des moyens pour recevoir les messages de déclenchement de transfert d'appels transmis par le dispositif de recharge, et éventuellement, dans le cas où le dispositif de recharge mémorise uniquement un numéro d'identification et non un numéro d'appel, des moyens pour mémoriser un numéro d'appel associé au numéro d'identification.

Une station mobile selon l'invention bien que conçue pour fonctionner en coopération avec un dispositif de recharge selon l'invention, est néanmoins susceptible d'être rechargée par un dispositif de recharge conventionnel, auquel cas aucun transfert d'appels ne peut être activé lorsque la station est introduite dans un tel dispositif de recharge conventionnel.

Enfin, on pourra remplacer tout moyen par un moyen équivalent sans sortir du cadre de l'invention.

## Revendications

**1/** Procédé de transfert d'appels à partir d'une station mobile d'un réseau de radiocommunications vers un autre poste dont le numéro d'appel est connu d'organes adaptés dudit réseau, le déclenchement du transfert d'appels étant effectué par l'intermédiaire de ladite station mobile communiquant à cet effet par voie radio avec ledit réseau, ladite station mobile étant en outre susceptible d'être placée sur un support,
caractérisé en ce que la détection de la présence de ladite station mobile (MS) sur ledit support (C) déclenche automatiquement le transfert d'appels (ACTIVATE CF) vers un autre poste.

**2/** Procédé selon la revendication 1, caractérisé en ce que ledit numéro d'appel est mis en mémoire dans ladite station mobile qui le communique auxdits organes.

**3/** Procédé selon la revendication 1, caractérisé en ce que ledit numéro d'appel est mis en mémoire au sein dudit support, qui le communique auxdits organes par l'intermédiaire de ladite station mobile dès que la présence de cette dernière est détectée sur ledit support.

**4/** Procédé selon la revendication 1, caractérisé en ce que, lorsque plusieurs supports sont disponibles pour recevoir ladite station mobile à plusieurs endroits différents, chacun desdits supports est muni d'un numéro d'identification, associé au numéro d'appel du poste vers lequel le transfert d'appels doit être effectué, ce numéro d'identification étant communiqué à ladite station mobile après que la présence de cette dernière a été détectée dans ledit support.

**5/** Procédé selon la revendication 4, caractérisé en ce que chaque numéro d'identification constitue un numéro d'appel du poste vers lequel le transfert doit être effectué, et en ce que ladite station communique ce numéro d'appel auxdits organes adaptés dudit réseau.

**6/** Procédé selon la revendication 4, caractérisé en ce que chaque numéro d'identification est associé à un numéro d'appel distinct correspondant au numéro d'appel du poste vers lequel le transfert doit être effectué, la correspondance entre les numéros d'appel et les numéros d'identification ayant été au préalable mise en mémoire au sein de ladite station mobile, cette dernière communiquant auxdits organes adaptés dudit réseau le numéro d'appel correspondant au numéro d'identification dont est muni le support sur lequel elle est posée.

**7/** Procédé selon la revendication 6, caractérisé en ce qu'au moins l'un desdits numéros d'identification, dit numéro réservé, n'est associé à aucun numéro d'appel et sert à empêcher le déclenchement automatique du transfert d'appels, même lorsque la présence de ladite station mobile est détectée sur ledit support.

**8/** Procédé selon la revendication 7, caractérisé en ce que le numéro de code associé à un support situé dans un véhicule mobile est un numéro réservé.

**9/** Procédé selon l'une des revendications 1 à 8, caractérisé en ce que le transfert est conditionnel, c'est-à-dire qu'il n'est effectué qu'en cas de non réponse de ladite station mobile à un appel.

**10/** Procédé selon l'une des revendications 1 à 9, caractérisé en ce que, une fois le transfert effectué, ladite station mobile est mise hors tension.

**11/** Procédé selon l'une des revendications 1 à 10, caractérisé en ce que, lorsque la présence de ladite station mobile sur le suport n'est plus détectée, ledit transfert est automatiquement annulé par ladite station mobile.

**12/** Procédé selon la revendication 11, caractérisé en ce que ledit transfert est automatiquement annulé après un délai préétabli.

**13/** Procédé selon la revendication 11, caractérisé en ce que ledit transfert est automatiquement annulé dès qu'un utilisateur utilise ladite station mobile.

**14/** Support destiné à recevoir une station mobile pour la mise en oeuvre du procédé conforme à l'une quelconque des revendications 1 à 13, caractérisé en ce qu'il comporte des moyens de détection de la présence de ladite station mobile, des moyens pour transmettre des messages de déclenchement de transfert d'appels à ladite station mobile ainsi que des moyens pour conserver en mémoire ledit numéro d'appel ou ledit numéro d'identification.

**15/** Support selon la revendication 14, caractérisé en ce qu'il comprend des moyens susceptibles d'être activés par un utilisateur, tels que, lorsqu'ils sont activés, même si la présence d'une station mobile a été détectée, aucun transfert n'est activé.

**16/** Support selon la revendication 14 ou 15, caractérisé en ce qu'il comporte des moyens de sélection d'un numéro d'identification par un usager.

**17/** Support conforme à l'une quelconque des revendications 14 à 16, caractérisé en ce qu'il consiste en un dispositif de recharge.

**18/** Station mobile pour la mise en oeuvre du procédé conforme à l'une quelconque des revendications 1 à 13, comprenant des moyens pour transmettre vers ledit réseau des messages de transfert d'appels, caractérisée en ce qu'elle comprend des moyens pour recevoir les messages de déclenchement de transfert d'appels transmis par ledit support.

**19/** Station mobile selon la revendication 18, caractérisée en ce qu'elle comprend, en outre, dans le cas où le dispositif de recharge mémorise uniquement un numéro d'identification et non un numéro d'appel, des moyens pour mémoriser un numéro d'appel associé au numéro d'identification.
